# EUROPÄISCHE PATENTSCHRIFT

(11) **EP 1 418 084 B1**
(45) Veröffentlichungstag und Bekanntmachung des Hinweises auf die Patenterteilung: **29.12.2004**
(21) Anmeldenummer: 02024119.6
(22) Anmeldetag: 29.10.2002
(51) Int. Cl.: B60M 1/26, H02G 7/02

(54) **Radspanner**
Tensioning pulley
Poulie de tensionnement

(43) Veröffentlichungstag der Anmeldung: 12.05.2004
(73) Patentinhaber: Richard Bergner Elektroarmaturen GmbH & Co.KG, 91126 Schwabach (DE)
(72) Erfinder: Liegel, Hans, 91183 Abenberg (DE)
(74) Vertreter: Tergau & Pohl Patentanwälte

(56) Entgegenhaltungen:
- DE-B- 1 090 705
- DE-B- 1 294 986
- DE-C- 963 784
- DE-C- 19 932 195

## Beschreibung

Die Erfindung betrifft einen Radspanner mit den Merkmalen des Oberbegriffs des Anspruchs 1.

Fahrdrähte und Tragseile einer Oberleitungsanlage müssen, unabhängig von Temperatur- und sonstigen externen Einflüssen, ständig mit einer bestimmten Zugkraft vorgespannt sein, um einen ordnungsgemäßen Betrieb der Oberleitungsanlage zu gewährleisten. Zum Abspannen von Tragseilen und Fahrdrähten dienen Nachspannvorrichtungen mit Radspannern.

Bei bekannten Radspannern erfolgt im Fall eines Seil- oder Fahrdrahtrisses oder -bruches eine Arretierung des Spannrades derart, dass am Umfang des Spannrades angebrachte Sperrzähne in eine am Mast befestigte Sperrklinge einrasten. Ein derartiger Radspanner ist beispielsweise aus der DE 297 31 425 U1 bekannt. Durch das Aufschlagen der Sperrzähne auf die Sperrklinge besteht die Gefahr, dass ein Sperrzahn bricht oder sich das Gesperre verkantet.

Aus der DE 199 32 195 C1 ist ein Radspanner bekannt, bei der das plötzliche Aufschlagen vermieden wird, indem das wiederum mit Sperrzähnen versehene Spannrad durch Eingreifen einer Rastverzahnung in ein Rastelement fast bis zum Stillstand abgebremst wird und das Sperren erfolgt, sobald der Zahngrund in die Rastverzahnung fällt. Auch bei dieser Lösung kann es, insbesondere durch die erhöhte Belastung der Rastzähne beim Abbremsen der Drehbewegung, zu gefährlichen Zahnbrüchen infolge von Materialermüdung kommen. Nachteilig an dieser Lösung ist weiterhin, dass bei dieser Konstruktion die Verklemmungsgefahr sehr hoch ist. Daher erfordert das Lösen einer solchen Arretierung einen hohen Aufwand und ist mit einer erhöhten Unfallgefahr verbunden.

Aus der DE 963 784 ist eine Nachspannvorrichtung für elektrische Bahnleitungen bekannt, die eine Fangvorrichtung mit einer Reibungsbremse aufweist. Dabei wird der Reibschluss mittels Reibkränzen und Bremsbacken hergestellt. Die DE 12 94 986 beschreibt eine Reibbremse, die ein Abbremsen des Nachspanngewichtes durch Klemmbacken ermöglicht, die bei einem Seüriss am Abspannseil angreifen. Eine ähnliche Bremsvorrichtung ist auch aus der DE 10 90 705 bekannt. Alle diese Systeme haben den Nachteil, dass zusätzliche Bremselemente in Form von Bremsbacken oder -klötze, Reibkränzen o.ä. erforderlich sind. Dies macht die Fangvorrichtung nicht nur konstruktiv aufwendiger. Die Bremselemente stellen auch eine zusätzliche Fehlerquelle dar, da sie bspw. aufgrund von Materialfehler im Einsatzfall versagen können.

Der Erfindung liegt die Aufgabe zugrunde, einen Radspanner mit einer besonders sicheren Fang- und Haltevorrichtung zu schaffen.

Eine Grundidee der Erfindung besteht darin, anstelle der bisher verwendeten Rastgesperre für eine Fang- und Haltevorrichtung eine Reibbremse zu verwenden. Dabei soll die zwischen einem laufenden bzw. umlaufenden und einem feststehenden Bremselement auftretende Reibung zum Abbremsen des Spannrades bis zu dessen Stillstand dienen. Die Reibbremse soll gleichzeitig als Haltearretierung nach dem Auffangen verwendet werden. Mit anderen Worten dient die Reibbremse in der Fang- und Haltevorrichtung nicht nur als Verzögerungs- sondern auch als Haltebremse.

Im Fehlerfall spricht die Reibbremse, da sich die Bremskraft kontinuierlich aufbaut, weich an. Die Rückwirkungskräfte auf den Mast über die obere Befestigung des Bremsbandes sind gemessen an denen des Standes der Technik (Rastbremse) minimal, insbesondere wegen der auftretenden Stoßbeanspruchung bei der Rastbremse.

Durch den erfindungsgemäßen Radspanner mit einer Fang- und Haltevorrichtung mit einer Reibbremse wird gewährleistet, dass sich die Oberleitungsanlage im Falle einer Störung (Seil- oder Fahrdrahtriss bzw. -bruch) nur unwesentlich aus ihrer Betriebsposition herausbewegt. Dadurch werden weitere Beschädigungen an der Oberleitungsanlage minimiert bzw. verhindert. Insbesondere können durch den Einsatz der Reibbremse auch besonders schwere Nachspanngewichte sichern abgefangen werden. Ein Verkanten oder Verklemmen der Fang- und Haltevorrichtung ist ausgeschlossen. Daher ist auch die Unfallgefahr für die die Reparatur ausführenden Monteure vermindert. Die Reparatur ist schneller durchzuführen, da das Rad und die Gewichte nur wenig angehoben werden müssen.

Die Reibbremse ist erfindungsgemäß als Bandbremse ausgestaltet. Besonders vorteilhaft ist hierbei eine Ausgestaltung als Außenbandbremse, bei der der Bremsträger in Form eines Bremsbandes oder Bremsseiles von außen um die Bremstrommel gelegt wird. Die Erzeugung der Bremskraft erfolgt vorzugsweise durch Gewichtswirkung. Während sich das im Betriebszustand freihängende Spannrad in einem Kräftegleichgewicht zwischen der über das Abspannseil wirkenden Zugkraft und der über das Nachspannseil wirkenden Gegenzugkraft befindet, bewirkt die bei Seil- oder Fahrdrahtriss auftretende Zugentlastung, dass die durch das Nachspanngewicht bewirkte Gegenzugkraft das Spannrad nach unten zieht. Dadurch wird das Bremsband oder Bremsseil gewichtsbelastet und die notwendige Bremskraft erzeugt. Das Bremsband bzw.Bremsseil bremst das Spannrad nicht stoßartig, sondern in einer gewissen Durchrutschbewegung ab. Das Spannrad wird dabei sehr schnell, jedoch nicht ruckartig, sonder kontinuierlich bis zum Stillstand abgebremst und in dieser Stellung gehalten. Es erfolgt mit anderen Worten eine selbsttätige Arretierung des Spannrades im Störungsfall. Gegenüber den herkömmlichen Fang- und Haltevorrichtungen mit Rastgesperren stellt diese Ausführungsform eine besonders einfache und dennoch zuverlässige Fang- und Haltevorrichtüng zur Verfügung.

Die Unteransprüche betreffen teils vorteilhafte und teils für sich selbst erfinderische Fortbildungen der Erfindung.

Nach der Lehre des Anspruchs 2 weist das Spannrad eine Spanntrommel mit kleinerem Durchmesser zur Aufnahme des Abspannseiles sowie eine größere Trommel zur Aufnahme des Gewichtsseiles (Nachspannseiles) auf. Durch die unterschiedlichen Trommeldurchmesser, beispielsweise derart, dass sich ein Übersetzungsverhältnis von 3:1 ergibt, kann das für das Nachspannen benötigte Nachspanngewicht im Verhältnis zu den Zugkräften am Abspannseil reduziert werden. Durch die Verwendung der großen Trommel als Bremstrommel wird eine besonders große Reibfläche zur Verfügung gestellt, sodass ein zuverlässiges Abbremsen gewährleistet ist.

Kleine und große Trommel sind drehbar gelagert. Dabei nutzen Sie vorzugsweise eine gemeinsame Nabe. Brems- und Spanntrommel können miteinander verschraubt oder in anderer Art und Weise miteinander verbunden werden. Vorteilhafterweise ist das Spannrad als eine Art Baukastensystem ausgestaltet, bei dem große und kleine Trommel auf einfache Art und Weise, beispielsweise durch Schnellverschlüsse miteinander verbunden werden können. Aufgrund dieser Austauschbarkeit können, beispielsweise durch die Verwendung von kleinen Trommeln mit unterschiedlichen Durchmessern verschiedene Übersetzungsverhältnisse, beispielsweise 3:1, 4:1 und 5:1 geschaffen werden, ohne dass die Bremstrommel ausgetauscht werden muss. Mit anderen Worten kann durch den Einsatz von Trommeln unterschiedlichen Durchmessers trotz der zur Verfügung stehenden konstanten Weglänge für das Nachspanngewicht die Nachspannvorrichtung an unterschiedliche Zugkräfte angepasst werden.

Der erfindungsgemäße Radspanner kann dabei sowohl für oberschlächtig als auch für unterschlächtig angeordnete Fahrdrähte bzw. Tragseile verwendet werden. Da in der Regel jeweils Tragseil und Fahrdraht gehalten werden müssen, sind Radspanner mit oberschlächtiger und unterschlächtiger Anordnung zumeist gleichzeitig im Einsatz. Jedoch muss hier nur eine einzige Bauart von Radspannern bereitgehalten werden. Das Nachspannseil kann darüber hinaus sowohl an der der Wand oder dem Mast zugewandte Seite des Spannrades oder der der Wand oder dem Mast abgewandten Seite des Spannrades entlang geführt werden.

Das Spannrad kann als Speichenrad, vorzugsweise mit einer ungeraden Anzahl von Speichen, oder nach Art einer Vollscheibe ausgeführt sein. Dabei kann das Spannrad aus einem metallischen Werkstoff, insbesondere aus Aluminium gefertigt sein, wodurch besonders leichte Spannräder geschaffen werden können. Dies ist insbesondere bei der Montage des Spannrades von Vorteil. Das Spannrad kann jedoch auch aus einem Kunststoff gefertigt sein. In diesem Fall ist eine elektrische Überbrückung von Abspannseil bzw. Gewichtsseil (Nachspannseil) zur Befestigungsvorrichtung erforderlich. Der Einsatz von Aluminium oder Kunststoff ermöglicht neben einer besonders leichten auch eine äußerst feste Konstruktion mit sehr guter Witterungsbeständigkeit. Besonders stabile Spannräder können durch den Einsatz von glasfaserverstärktem Kunststoff (GFK) gefertigt werden. Spannräder aus Kunststoff können ohne ein spezielles Lager direkt auf einer Achse gelagert sein. Die verwendeten Kunststoffspannräder können jedoch auch eine feste Achse aufweisen, die in einer Halterung gelagert ist und dort rotiert.

Zur Montage des Spannrades an eine Wand oder einem Mast nahe der Gleisanlagen ist eine Befestigungsvorrichtung vorgesehen (Anspruch 3). Dabei weist die Befestigungsvorrichtung eine Lagerung für ein am Spannrad angebrachtes Hebelgestänge auf. Die Lagerung ist dabei als Schwenklager ausgestaltet, sodass ein vertikales Verschwenken des Hebelgestänges und damit ein Verschwenken des daran angebrachten Spannrades ermöglicht wird (Anspruch 4).

Für das Verschwenken des Spannrades wird eine konstruktiv besonders einfache und daher wenig fehleranfällige Lösung vorgeschlagen. Das Hebelgestänge weist hierfür einen Lagerbolzen auf, der durch ein oberes und ein unteres Lagerauge des Schwenklagers geführt wird (Anspruch 5). Während der Lagerbolzen mit einer Umfangsnut das obere Lagerauge hintergreift (Anspruch 6) und rückwärtig durch einen Lagerschuh gesichert ist (Anspruch 7), liegt der Lagerbolzen in einer vorzugsweise als U-Kulisse ausgebildeten Längsführung als unterem Lagerauge ein, und kann dort in horizontaler Richtung verschwenken.

Neben der vertikalen Schwenkbewegung kann das Hebelgestänge und damit auch das Spannrad eine horizontale Schwenkbewegung ausführen. Diese horizontale Verschwenkung ist aufgrund der zur Gleismitte zumeist um mehrere Meter versetzt an der Wand oder einem Mast angeordneten Nachspanneinrichtung erforderlich und lässt sich erfindungsgemäß durch eine konstruktiv sehr einfache Lösung verwirklichen, indem der Lagerbolzen in den Lageraugen drehbar gelagert ist (Anspruch 8). Hierzu weist der Lagerbolzen vorzugsweise einen kreisrunden Querschnitt auf. Aufwändigere und fehJeranfälligere Lösungen, wie sie aus dem Stand der Technik für ein horizontales Verschwenken bekannt sind, beispielsweise verschiedenartige Scharniergelenke, können hierdurch vermieden werden.

Das Bremsband oder Bremsseil ist an einem ersten Anschluss an der Wand oder dem Mast befestigt (Anspruch 9). Mit diesem ersten Bandanschluss wird eine starre oder elastisch- dämpfende Befestigung ermöglicht. Er ist vorzugsweise nachstellbar ausgeführt. Die Befestigung erfolgt dabei vorteilhafterweise an einer oberhalb der Normalstellung des Spannrades befindlichen Stelle an der Wand oder dem Mast.

Darüber hinaus ist das Bremsband oder Bremsseil mit einem zweiten Anschluss am Hebelgestänge verbunden (Anspruch 10). Dadurch liegt das Bremsband oder Bremsseil mit einen Umschlingungswinkel von etwa 240° +/- 20° um die Bremstrommel herum an (Anspruch 11). Zur Verstärkung der Bremswirkung kann das Bremsband oder Bremsseil auch mehrmals um die Bremstrommel geschlungen sein. Dadurch ergibt sich eine sogenannte Schlingbandbremse.

Tritt nun einem Seil- oder Fahrdrahtriss bzw. -bruch auf, kommt es zu einer Zugentlastung am Abspannseil. Durch das am Nachspannseil wirkende Nachspanngewicht und das Eigengewicht des Spannrades kommt es zu einer vertikalen Verschwenkung des Spannrades. Im Störungsfall dienen also sowohl das Nachspanngewicht als auch das Eigengewicht das Spannrades als Bremsgewicht. Der in der Lagerung der Befestigungsvorrichtung einliegende Lagerbolzen wandert im unteren Lagerauge in Richtung auf die Wand bzw. den Mast aus. Die Entfernung der Hauptachse des Spannrades zum oberen ersten Bandanschluss vergrößert sich, was zum kontinuierlichen Zuziehen der Bremsschlinge und damit zum Abbremsen des Spannrades führt.

Im Gegensatz zum Stand der Technik, bei dem der Abstand der Sperrzähne zur Sperrklinge sehr genau eingestellt werden muss, müssen bei dem erfindungsgemäßen Radspanner lediglich die Länge des Bremsbandes bzw. -seiles und die Lage der Befestigungspunkte, also der obere und der untere Bandanschluss aufeinander abgestimmt werden. Dies ist beispielsweise durch eine bekannte Nachstellvorrichtung, vorzugsweise am ersten Bandanschluss, sehr einfach durchführbar. Durch diese einfache Handhabung können auch Toleranzen, die sich bei der Montage vor Ort ergeben, einfach ausgeglichen werden. Gegenüber den herkömmlichen Radspannern besteht weiterhin der Vorteil, dass das Spannrad unabhängig von seinem Drehsinn im Hebelgestänge eingebaut werden kann.

Die Bremstrommel weist vorzugsweise eine Bremsrille auf, in der das Bremsband bzw. Bremsseil einliegt (Anspruch 12). Die für die Bremswirkung erforderliche Reibung findet dann zwischen dem Bremsband bzw. dem Bremsseil und dem Boden der Rille statt. Zur Erhöhung der Bremswirkung weist die Bremsrille eine aufgeraute Oberfläche auf (Anspruch 13).

Wird ein Bremsseil, beispielsweise ein Rundseil verwendet, so sind die Bremsrillenkeiloder trapezförmig ausgestaltet oder weisen einen runden Querschnitt auf (Anspruch 14). Bei Verwendung eines flachen Bremsbandes hingegen sind vorzugsweise rechteckige Bremsrillen vorgesehen (Anspruch 15). Die Bremsrillen dienen dabei als eine Art Kulisse zur Führung des Bremsbandes bzw. -seiles Bremsrille und Bremsband bzw. -seil sind dabei derart aufeinander abgestimmt, dass es zu keinen Verklemmungen in der Bremsrille kommt.

Neben Seilen, Vollprofilbändern, Flachgeweben können auch Flachseile, Flachprofile oder gurtartige Seile, textile Gurte oder Metallprofile als Bremselement verwendet werden. Werden auch als Abspannseil und Nachspannseil Bänder verwendet, können die bisher auf großer und kleiner Trommel angebrachten rillenförmigen Kulissen für die Seilführung entfallen.

Zur Führung des Nachspanngewichts, das zumeist in Gewichtssäulen aus Beton- oder Metallelementen zusammengefasst ist, ist ein Führungsarm vorgesehen, der an der Befestigungsvorrichtung angebracht ist (Anspruch 16).

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden, wobei gleiche oder gleichwirkende Teile mit den gleichen Bezugszeichen versehen sind. Hierbei zeigen:
Fig. 1 eine Seitenansicht eines ersten Radspanners im Betriebszustand,
Fig. 2 eine Seitenansicht eines zweites Radspanners im Betriebszustand,
Fig. 3 eine Seitenansicht des Radspanners aus Fig. 1 im Störungsfall,
Fig. 4 eine Draufsicht auf den Radspanner aus Fig. 1,
Fig. 5 eine Draufsicht auf das obere Lagerauge,
Fig. 6 eine Draufsicht auf das untere Lagerauge im Betriebszustand,
Fig. 7 eine Draufsicht auf das untere Lagerauge im Störungsfall,
Fig. 8 eine Teilansicht der Trommeloberflächen.

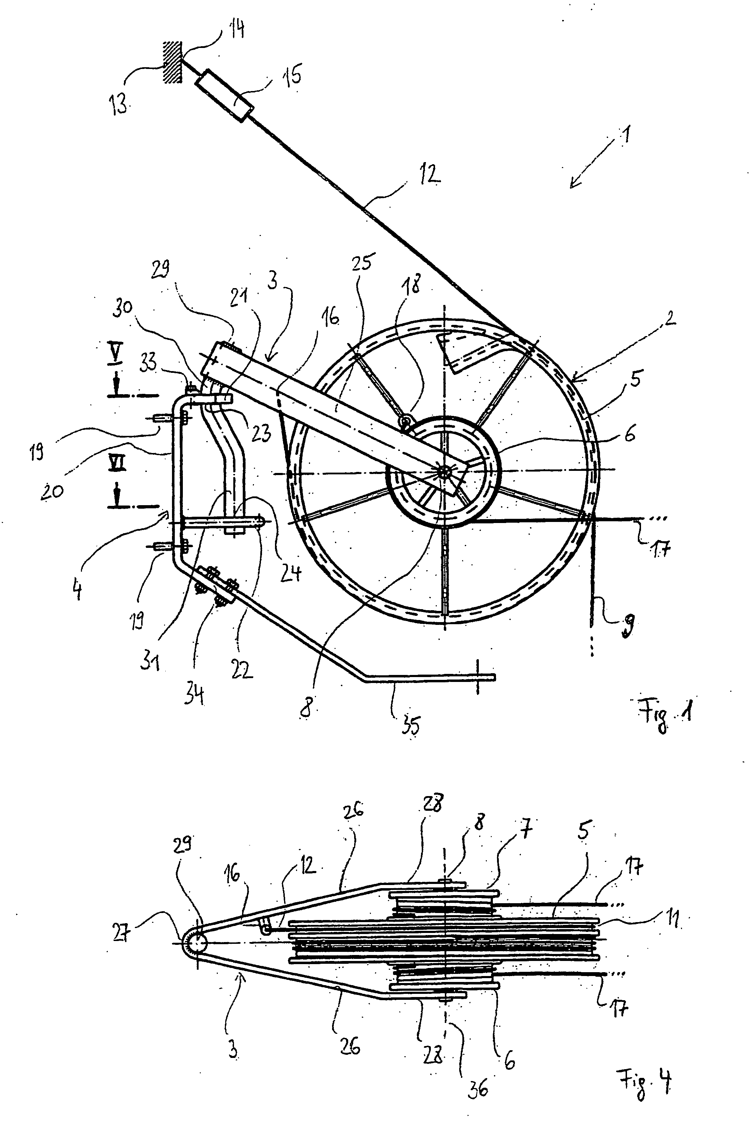

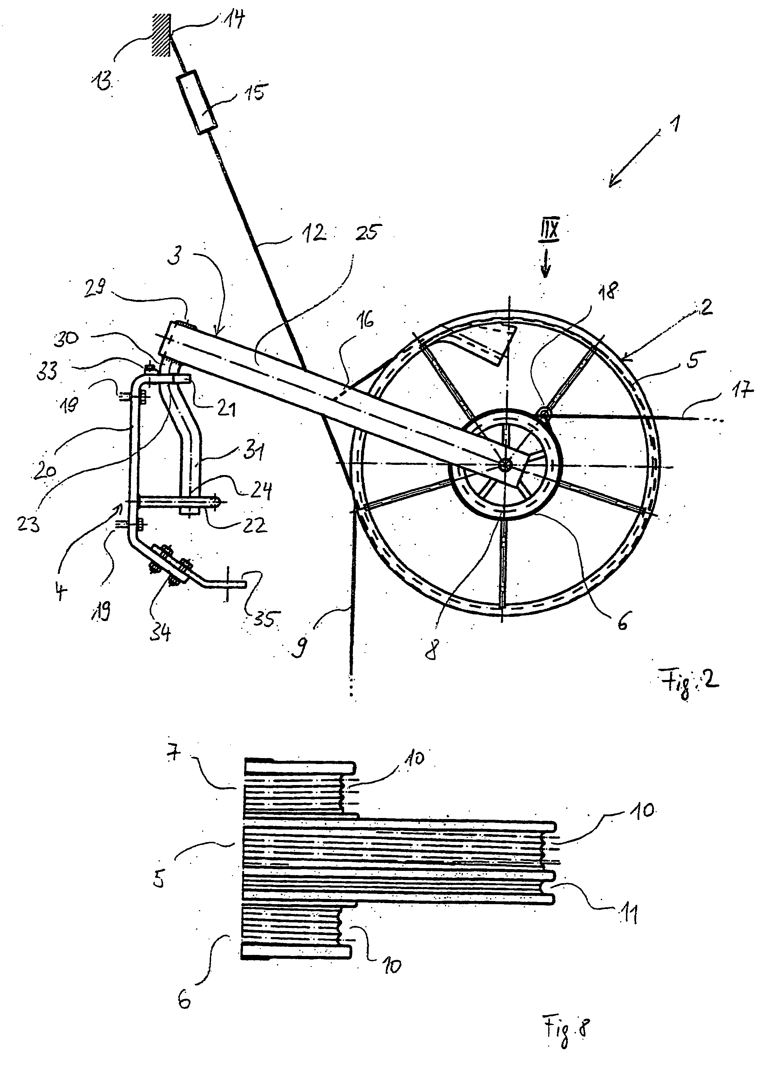

In den Fig. 1 und 2 sind erfindungsgemäße Radspanner 1 abgebildet. Dabei zeigt Fig. 1 eine unterschlächtige und Fig. 2 eine oberschlächtige Anordnung der Fahrdrahtabspannung.

Der Radspanner 1 besteht im Wesentlichen aus einem Spannrad 2, das über ein Hebelgestänge 3 mit einer Befestigungsvorrichtung 4 verbunden ist. Das Spannrad 2 in Form eines Speichenrades weist eine größere Trommel 5 und zwei zu beiden Seiten der größeren Trommel 5 angeordnete kleinere Trommeln 6, 7 auf, vgl. Fig. 4, so dass sich ein symmetrischer Aufbau des Spannrades 2 ergibt. Die Trommeln 5, 6, 7 sind auf einer gemeinsamen Nabe 8 drehbar gelagert.

An der größeren Trommel 5 ist das Seil 9 für das Nachspanngewicht (nicht dargestellt) aufgerollt und befestigt. Zusätzlich ist die größere Trommel (Bremstrommel) 5 zur Aufnahme der Bremselemente ausgestaltet. Die Bremstrommel 5 weist zu diesem Zweck zusätzlich zu der keilkammerförmigen Kulisse 10 zur Führung des Nachspannseiles 9 eine dazu benachbart angeordnete kulissenartige Bremsrille 11 zur Aufnahme eines Bremsseiles 12 auf, vgl. Fig. 8. Die Bremsrille 11 weist einen trapezförmigen Querschnitt auf und ist zur Erzielung einer stärkeren Reibung zwischen dem Bremsseil 12 und dem Boden der Bremsrille 11 aufgeraut. Das Bremsseil 12 ist oberhalb der Befestigungsvorrichtung 4 an der Wand 13 befestigt. Dieser obere Befestigungspunkt 14 ist mit Hilfe einer aus dem Stand der Technik bekannten Vorrichtung 15 nachstellbar. Dadurch können auf einfache Art und Weise unterschiedliche Bremsseillängen eingestellt werden. Das Bremsseil 12 liegt in der trapezförmigen Bremsrille 11 ein und umschlingt die Bremstrommel 5 mit einem Umschlingungswinkel von ca. 240°. Das gegenüberliegende Ende des Bremsseiles 12 ist an einer entsprechenden Haltevorrichtung 16 am Hebelgestänge 3 befestigt.

Das über die Spanntrommeln 6, 7 geführte Abspannseil 17 ist als Doppelseil ausgestaltet und an den beiden kleinen Trommeln (Spanntrommeln) 6, 7 durchgeschleift mit üblichen Befestigungsmitteln 18 befestigt. Das in Fig. 4 gezeigte Doppelseil 17 für die Fahrdrahtabspannung wird mit einem aus dem Stand der Technik bekannten Haltejoch (nicht abgebildet) zusammengeführt. Auch an den Trommeloberflächen der in Fig. 8 dargestellten bevorzugten Ausführungsform der Spanntrommel 6, 7 sind zur Führung des Abspannseils 17 Führungskulissen 10 in Form von Rillen angebracht.

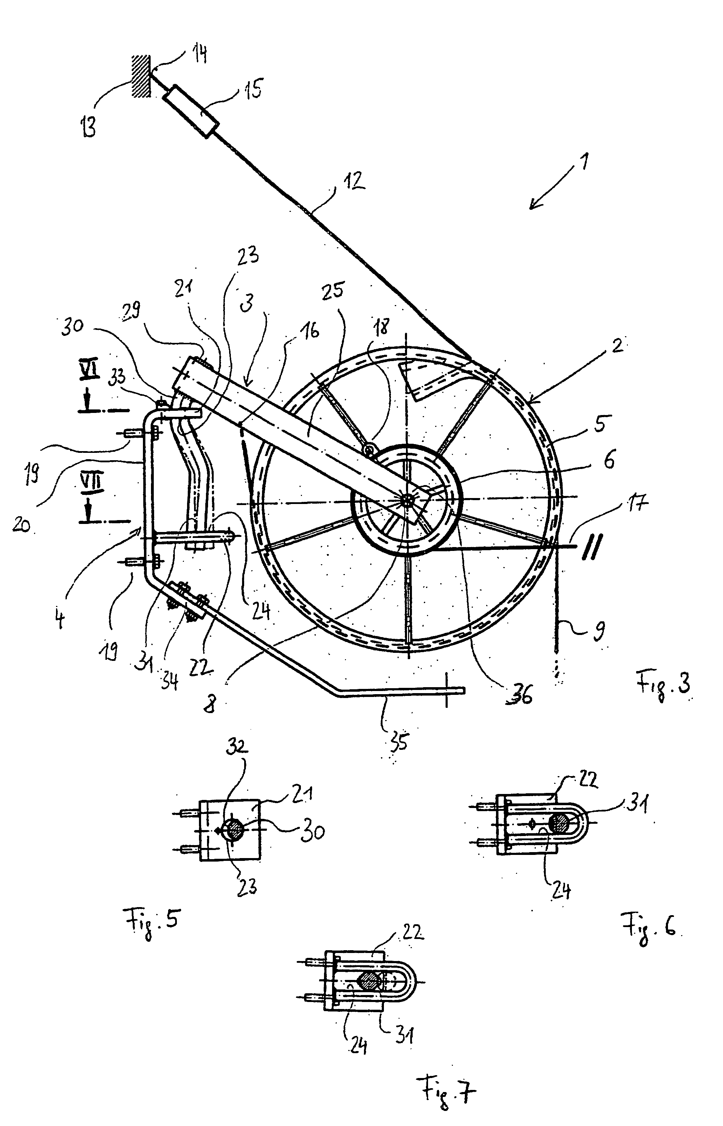

Die Befestigungsvorrichtung 4 weist zur Befestigung an der Wand 13 aus dem Stand der Technik bekannte Befestigungselemente 19 auf. Aus dem vertikal verlaufenden Grundkörper 20 der Befestigungsvorrichtung 4 ragen zwei übereinander angeordnete Aufnahmeelemente 21, 22 in Richtung auf das in etwas in gleicher Höhe dazu angeordnete Spannrad 2 hinaus. Im oberen Aufnahmeelement 21 ist dabei eine in etwa kreisrunde Aufnahmeöffnung 23 eingebracht, die als Lagerauge dient, vgl. Fig. 5. Das untere Aufnahmeelement 22 weist eine Längsführung in Form einer U-Kulisse 24 auf, die ein zweites, vom ersten Lagerauge vertikal beabstandetes Lagerauge ausbildet, vgl. Fig. 6.

Das Hebelgestänge 3 besteht im Wesentlichen aus einem V-förmig nach Art einer Gabel ausgebildeten Schwenkhebel 25. Dabei laufen die beiden Schwenkarme 26 im V-Grund 27 zusammen, während ihre Freienden 28 an der gemeinsamen Nabe 8 mit dem Spannrad 2 verbunden sind. Am V-Grund 27 des Schwenkhebels 25 ist ein Lagerbolzen 29 starr befestigt, der mit seinem Bolzenfuß 30 nach unten in etwa senkrecht vom Schwenkhebel 25 weg ragt. Der Lagerbolzen 29 weist ausgehend von seinem Bolzenfuß 30 eine leicht geschwungene S-Form auf, bis er nach etwa der Hälfte seiner Länge in einen gerade auslaufenden Bolzenkopf 31 übergeht.

Der Lagerbolzen 29 liegt in beiden Lageraugen 23, 24 der Befestigungsvorrichtung 4 ein. Im Bereich des Bolzenfußes 30 weist der Lagerbolzen 29 eine eingefräste Umfangsnut 32 auf, mit der er in der Öffnung 23 des ersten Lagerauges verrastet. Die Lage des Lagerbolzens 29 wird dabei rückwärtig durch einen Lagerschuh 33 gesichert. Der Bolzenkopf 31 des Lagerbolzens 29 liegt im unteren Lagerauge 24 ein, vergleiche Fig. 6. Der Lagerbolzen 29 ist zudem kreisrund ausgeführt, sodass ein horizontales Verschwenken des Hebelgestänges 3 einfach möglich ist. Im Betriebszustand verläuft der gerade Bolzenkopf 31 in etwa parallel zum Grundkörper 20 der Befestigungsvorrichtung 4. Zwischen Wand 13 und Schwenkhebel 25 wird ein spitzer Winkel eingeschlossen.

Der Grundkörper 20 der Befestigungsvorrichtung 4 geht in seinem unteren Teil in eine schräg von der Wand 13 abweisende Befestigungsschräge 34 über. An dieser Befestigungsschräge 34 können unterschiedlich dimensionierte Haltestangen 35 zur Führung des Nachspanngewichtes angebracht werden.

In Fig. 3 ist der Radspanner 1 aus Fig. 1 bei einem Fahrdrahtbruch bzw. -riss dargestellt. Durch die bei einem derartigen Störungsfall auftretende Zugentlastung am Abspannseil 17 entfällt der Gegenzug für das Nachspanngewicht, sodass dieses nach unten fällt. Hierdurch gerät das Spannrad 2 in eine Drehbewegung. Gleichzeitig erfolgt ein vertikales Verschwenken des Spannrades 2 in Richtung Wand 13. Die Hauptachse 36 des Spannrades 2 wandert dabei nach unten, so dass sich das mit dem Spannrad 2 verbundene Hebelgestänge 3 nach Art einer Wippe ebenfalls in Richtung Wand 13 verschwenkt. Der Bolzenkopf 31 des Lagerbolzens 29 verfährt in dem unteren Lagerauge 24 in Richtung auf den Mast 13, vgl. Fig. 7. Die Entfernung zwischen der Hauptachse 36 des Spannrades 2 und dem oberen Befestigungspunkt 14 vergrößert sich, sodass das um die Bremstrommel 5 anliegende Bremsseil 12 zuzieht und die Drehbewegung des Spannrades 2 bis zum Stillstand abbremst und das Spannrad 2 sicher in der Fangstellung hält

Je nachdem, ob es sich um eine oberschlächtige oder unterschlächtige Anordnung des Spannrades 2 handelt, kommen verschieden lange Schwenkhebel 25 zum Einsatz. Spannrad 2 und Befestigungsvorrichtung 4 können jedoch unabhängig davon in identischer Bauform verwendet werden.

### Bezugszeichenliste

- 1: Radspanner
- 2: Spannrad
- 3: Hebelgestänge
- 4: Befestigungsvorrichtung
- 5: Bremstrommel
- 6: Spanntrommel
- 7: Spanntrommel
- 8: Nabe
- 9: Gewichtsseil
- 10: Kulisse
- 11: Bremsrille
- 12: Bremsseil
- 13: Wand
- 14: Oberer Befestigungspunkt
- 15: Nachstellvorrichtung
- 16: Unterer Befestigungspunkt
- 17: Abspannseil
- 18: Befestigungsmittel
- 19: Befestigungselement
- 20: Grundkörper
- 21: Aufnahmeelement
- 22: Aufnahmeelement
- 23: Aufnahmeöffnung
- 24: Längsführung
- 25: Schwenkhebel
- 26: Schwenkarm
- 27: V-Grund
- 28: Freiende
- 29: Lagerbolzen
- 30: Bolzenfuß
- 31: Bolzenkopf
- 32: Umfangsnut
- 33: Lagerschuh
- 34: Befesügungsschräge
- 35: Haltestange
- 36: Hauptachse

## Patentansprüche

1. Radspanner (1) für einen Fahrdraht oder ein Tragseil einer Oberleitungsanlage mit einer eine Bandbremse aufweisenden Fang- und Haltevorrichtung für den Fall eines Seil- oder Fahrdrahtrisses oder dergleichen, mit einem vertikal verschwenkbaren Spannrad (2) mit einer Bremstrommel (5) und mit einem Bremsband oder Bremsseil (12), wobei das bei einem Seil- oder Fahrdrahtriss verschwenkende Spannrad (2) das Bremsband oder Bremsseil (12) gewichtsbelastet derart, dass die Reibung zwischen Bremsband oder Bremsseil (12) und Bremstrommel (5) zum Stillstand des Spannrades (2) führt.

2. Radspanner (1) nach Anspruch 1,
**dadurch gekennzeichnet,**
**dass** das Spannrad (2) eine kleine Trommel (6, 7) zur Aufnahme des Abspannseiles (17) und eine große Trommel (5) zur Aufnahme des Gewichtsseiles (9) aufweist, wobei die große Trommel (5) zugleich als Bremstrommel dient.

3. Radspanner (1) nach Anspruch 1 oder 2,
**gekennzeichnet durch**,
ein am Spannrad (2) angebrachtes Hebelgestänge (3) und eine Befestigungsvorrichtung (4) zur Montage an einer Wand (13) oder einem Mast mit einer Lagerung für das Hebelgestänge (3).

4. Radspanner (1) nach Anspruch 3,
**dadurch gekennzeichnet,**
**dass** die Befestigungsvorrichtung (4) ein Schwenklager (23, 24) zur Lagerung des Hebelgestänges (3) aufweist, das bei einem Seil- oder Fahrdrahtriss ein durch die Nachspanngewichte bedingtes vertikales Verschwenken des Hebelgestänges (3) ermöglicht.

5. Radspanner (1) nach Anspruch 4,
**dadurch gekennzeichnet,**
**dass** das Hebelgestänge (3) einen mit dem Spannrad (2) verbundenen Schwenkhebel (25) und einen mit dem Schwenkhebel (25) verbundenen Lagerbolzen (29) aufweist und dass das Schwenklager ein oberes Lagerauge (23) und ein unteres Lagerauge (24) aufweist wobei das untere Lagerauge (24) als eine Längsführung ausgebildet ist.

6. Radspanner (1) nach Anspruch 5,
**gekennzeichnet durch**,
eine im Lagerbolzen (29) angebrachte Umfangsnut (32) zur Halterung des Lagerbolzens (29) im oberen Lagerauge (23).

7. Radspanner (1) nach Anspruch 5 oder 6,
**gekennzeichnet durch**,
einen den Lagerbolzen (29) im oberen Lagerauge (23) fixierenden Lagerschuh (33).

8. Radspanner (1) nach einem der Ansprüche 5 bis 7,
**gekennzeichnet durch**,
einen in den Lageraugen (23, 24) drehbaren Lagerbolzen (29) für ein horizontales Verschwenken des Hebelgestänges (3).

9. Radspanner (1) nach einem der Ansprüche 3 bis 8,
**dadurch gekennzeichnet,**
**dass** das Bremsband oder Bremsseil (12) einen ersten Anschluss (14) an der Wand (13) oder dem Mast aufweist.

10. Radspanner (1) nach einem der Ansprüche 3 bis 9,
**dadurch gekennzeichnet,**
**dass** das Bremsband oder Bremsseil (12) einen zweiten Anschluss (16) am Hebelgestänge (3) aufweist.

11. Radspanner (1) nach einem der Ansprüche 1 bis 10,
**gekennzeichnet durch**,
einen Umschlingungswinkel des Bremsbandes oder Bremsseiles (12) um die Bremstrommel (5) von circa 240°.

12. Radspanner (1) nach einem der Ansprüche 1 bis 11,
**gekennzeichnet durch**,
eine an der Bremstrommel (5) angeordnete Bremsrille (11) zur Aufnahme des Bremsbandes oder Bremsseiles (12).

13. Radspanner (1) nach Anspruch 12,
**dadurch gekennzeichnet,**
**dass** die Bremsrille (11) eine aufgeraute Oberfläche aufweist.

14. Radspanner (1) nach Anspruch 12 oder 13,
**dadurch gekennzeichnet,**
**dass** die Bremsrille (11) einen keil- oder trapezförmigen oder einen runden Querschnitt aufweist:

15. Radspanner (1) nach Anspruch 12 oder 13,
**dadurch gekennzeichnet,**
**dass** die Bremsrille (11) einen rechteckigen Querschnitt aufweist.

16. Radspanner (1) nach einem der Ansprüche 3 bis 15,
**gekennzeichnet durch**,
einen an der Befestigungsvorrichtung (4) angebrachten Führungsarm (35) zur Führung des Nachspanngewichtes.

## Claims

1. Wheel tensioner (1) for a contact wire or a carrying cable of a catenary system, having an intercepting and retaining device, which has a band brake, for the event of a cable or contact wire tearing or the like, having a vertically pivotable tensioning wheel (2) with a brake drum (5) and with a brake band or brake cable (12), the tensioning wheel (2), which pivots in the event of a cable or contact wire tearing, weight-loading the brake band or brake cable (12) in such a manner that the friction between the brake band or brake cable (12) and brake drum (5) results in the tensioning wheel (2) coming to a standstill.

2. Wheel tensioner (1) according to Claim 1, **characterized in that** the tensioning wheel (2) has a small drum (6, 7) for receiving the end-tensioning cable (17) and a large drum (5) for receiving the weight cable (9), the large drum (5) serving at the same time as a brake drum.

3. Wheel tensioner (1) according to Claim 1 or 2, **characterized by** a lever linkage (3) which is fitted on the tensioning wheel (2), and a fastening device (4) for fitting it on a wall (13) or a mast with a mounting for the lever linkage (3).

4. Wheel tensioner (1) according to Claim 3, **characterized in that** the fastening device (4) has a pivot bearing (23, 24) for the mounting of the lever linkage (3), the said pivot bearing enabling, when a cable or contact wire tears, a vertical pivoting of the lever linkage (3) brought about by the counterweights.

5. Wheel tensioner (1) according to Claim 4, **characterized in that** the lever linkage (3) has a pivot lever (25) which is connected to the tensioning wheel (2) and a bearing bolt (29) which is connected to the pivot lever (25), and **in that** the pivot lever has an upper bearing eye (23) and a lower bearing eye (24), the lower bearing eye (24) being designed as a longitudinal guide.

6. Wheel tensioner (1) according to Claim 5, **characterized by** a circumferential groove (32) made in the bearing bolt (29) for securing the bearing bolt (29) in the upper bearing eye (23).

7. Wheel tensioner (1) according to Claim 5 or 6, **characterized by** a bearing shoe (33) fixing the bearing bolt (29) in the upper bearing eye (23).

8. Wheel tensioner (1) according to one of Claims 5 to 7, **characterized by** a bearing bolt (29) which can be rotated in the bearing eyes (23, 24) for a horizontal pivoting of the lever linkage (3).

9. Wheel tensioner (1) according to one of Claims 3 to 8, **characterized in that** the brake band or brake cable (12) has a first connection (14) on the wall (13) or the mast.

10. Wheel tensioner (1) according to one of Claims 3 to 9, **characterized in that** the brake band or brake cable (12) has a second connection (16) on the lever linkage (3).

11. Wheel tensioner (1) according to one of Claims 1 to 10, **characterized by** an angle of wrap of the brake band or brake cable (12) around the brake drum (5) of circa 240°.

12. Wheel tensioner (1) according to one of Claims 1 to 11, **characterized by** a brake groove (11) arranged on the brake drum (5) for receiving the brake band or brake cable (12).

13. Wheel tensioner (1) according to Claim 12, **characterized in that** the brake groove (11) has a roughened surface.

14. Wheel tensioner (1) according to Claim 12 or 13, **characterized in that** the brake groove (11) has a wedge-shaped or trapezoidal or a round cross section.

15. Wheel tensioner (1) according to Claim 12 or 13, **characterized in that** the brake groove (11) has a rectangular cross section.

16. Wheel tensioner (1) according to one of Claims 3 to 15, **characterized by** a guide arm (35) which is fitted on the fastening device (4) for guiding the counterweight.

## Revendications

1. Tendeur à poulie (1) pour un caténaire ou un câble porteur d'une installation à fil aérien, comportant un dispositif de garde et de retenue présentant un frein à bande pour le cas d'une rupture de câble ou de caténaire ou similaire, comportant une poulie de tension (2) susceptible de pivoter verticalement, avec un tambour de frein (5) et une bande de frein ou un câble de frein (12), la poulie de tension (2) qui pivote lors d'une rupture de câble ou de caténaire charge par contrepoids la bande de frein ou le câble de frein (12) de telle sorte que la friction entre la bande de frein ou le câble de frein (12) et le tambour de frein (5) entraîne l'arrêt de la poulie de tension (2).

2. Tendeur à poulie (1) selon la revendication 1, **caractérisé en ce que** la poulie de tension (2) présente un petit tambour (6, 7) pour recevoir le câble de haubanage (17) et un grand tambour (5) pour recevoir le câble formant poids (9), le grand tambour (5) servant en même temps de tambour de frein.

3. Tendeur à poulie (1) selon l'une ou l'autre des revendications 1 et 2, **caractérisé par** une tringlerie à leviers (3) montée sur la poulie de tension (2) et par un dispositif de fixation (4) pour le montage sur un mur (13) ou sur un mât avec un logement pour la tringlerie à leviers (3).

4. Tendeur à poulie (1) selon la revendication 3, **caractérisé en ce que** le dispositif de fixation (4) présente un palier pivotant (23, 24) pour monter la tringlerie à leviers (3) qui permet, en cas de rupture de câble ou de caténaire, un pivotement vertical de la tringlerie à leviers (3) dû au contrepoids de tension de caténaire.

5. Tendeur à poulie (1) selon la revendication 4, **caractérisé en ce que** la tringlerie à leviers (3) présente un levier pivotant (24) relié à la poulie de tension (2) et un tourillon (29) relié au levier pivotant (25), et **en ce que** le palier pivotant présente un oeillet de montage supérieur (23) et un oeillet de montage inférieur (24), l'oeillet de montage inférieur (24) étant réalisé sous forme de guidage longitudinal.

6. Tendeur à poulie (1) selon la revendication 5, **caractérisé par** une gorge périphérique (32) aménagée dans le tourillon (29) pour fixer le tourillon (29) dans l'oeillet de montage supérieur (23).

7. Tendeur à poulie (1) selon l'une ou l'autre des revendications 5 et 6, **caractérisé par** un coussinet de palier (33) fixant le tourillon (29) dans l'oeillet de montage supérieur (23).

8. Tendeur à poulie (1) selon l'une des revendications 5 à 7, **caractérisé par** un tourillon (29) rotatif dans les oeillets de montage (23, 24) pour permettre un pivotement horizontal de la tringlerie à leviers (3).

9. Tendeur à poulie (1) selon l'une des revendications 3 à 8, **caractérisé en ce que** la bande de frein ou le câble de frein (12) présente un premier raccordement (14) au mur (13) ou au mât.

10. Tendeur à poulie (1) selon l'une des revendications 3 à 9, **caractérisé en ce que** la bande de frein ou le câble de frein (12) présente un deuxième raccordement (16) à la tringlerie à leviers (3).

11. Tendeur à poulie (1) selon l'une des revendications 1 à 10, **caractérisé par** un angle d'enroulement de la bande de frein ou du câble de frein (12) autour du tambour de frein (5) sur environ 240°.

12. Tendeur à poulie (1) selon l'une des revendications 1 à 11, **caractérisé par** une rainure de frein (11) agencée sur le tambour de frein (5) pour recevoir la bande de frein ou le câble de frein (12).

13. Tendeur à poulie (1) selon la revendication 12, **caractérisé en ce que** la rainure de frein (11) présente une surface rugueuse.

14. Tendeur à poulie (1) selon l'une ou l'autre des revendications 12 et 13, **caractérisé en ce que** la rainure de frein (11) présente une section transversale de forme cunéiforme ou trapézoïdale ou ronde.

15. Tendeur à poulie (1) selon l'une ou l'autre des revendications 12 et 13, **caractérisé en ce que** la rainure de frein (11) présente une section transversale rectangulaire.

16. Tendeur à poulie (1) selon l'une des revendications 3 à 15, **caractérisé par** un bras de guidage (35) monté sur le dispositif de fixation (4) pour guider le contrepoids de tension des caténaires.
